# EUROPEAN PATENT SPECIFICATION

(11) **EP 2 551 148 B1**
(45) Date of publication and mention of the grant of the patent: **04.05.2016**
(21) Application number: 12178042.3
(22) Date of filing: 26.07.2012
(51) Int. Cl.: B60M 1/18, B60M 1/20

(54) **Suspension arrangement for an overhead line**
Traganordnung für einen Fahrdraht
suspension pour ligne caténaire

(30) Priority: 29.07.2011 SE 1150727
(43) Date of publication of application: 30.01.2013
(73) Proprietor: Elektrifierade lastplatser Sverige AB, 791 36 Falun (SE)
(72) Inventor: Hoppe, Bengt, 791 36 Falun (SE)
(74) Representative: Brann AB

(56) References cited:
- WO-A1-91/08923
- CN-A- 1 994 784
- DE-A1- 4 107 074
- GB-A- 835 227
- US-A- 1 597 813

## Description

### TECHNICAL FIELD

The present invention generally relates to overhead lines for power supply of a train. More specifically the present invention relates to a suspension arrangement for an overhead line that allows vertical loading of trains.

### BACKGROUND

Goods transport using electric trains is an important way of transportation for many different types of goods in the society of today and in the future, due to a limited supply of fossil fuels. Usually, an electric train is supplied with power from a pantograph, which is brought in contact with an energized conductor running along the railway. This energized conductor is commonly denoted contact line,

A contact line can be arranged beside the railway, for example a metro. Normally, for goods transport the contact line is arranged above the railway, this arrangement of the contact line is commonly denoted an overhead line. The electric train comprises a device for bringing the pantograph in electric contact with the overhead line. The overhead line is mounted using poles and supporting arrangements along the railway. Normally, the overhead line comprises a contact wire carried by a catenary and catenary hangers. Thereby, the distance can be increased between the poles and the overhead line becomes more controlled and to a smaller extent free hanging.

During loading of an electric train a technical problem arises caused by the suspension arrangement for an overhead line. This technical problem is caused by the overhead line that limits the access to the vertical space above the train. Thereby, loading is impossible by using overhead travelling cranes and cranes. Loading by using a truck demands extreme precautions in order to protect the overhead line from damages and to protect the truck from spark-over. In earlier solutions this problem has been solved by using a railway yard without overhead lines, which prohibits the use of electrical trains for transportations within the railway yard. A disadvantage with this solution is that special railway yards must be constructed and personnel must be engaged for switching and coupling of the trains.

An alternative solution to the described technical problem is to move the overhead line to an inactive position that allows vertical access to the train, which solution is disclosed in for example DE1803762. The largest disadvantage with this solution is that a catenary is not used, whereby the use is limited to primitive overhead lines, such as for example overhead lines consisting of a contact wire.

Another solution to the described technical problem is disclosed in EP1414667. This solution utilizes a turn of the complete suspension arrangement to an inactive position, wherein the overhead line is twisted during the movement. A twist of the overhead line is not desirable since a torque on the overhead line can cause fatigue breakdown of the same. Modern overhead lines are constructed with a catenary carrying the contact wire using catenary hangers in this type of construction the contact wire is operable for power supply of the train. An overhead line of this type is especially sensitive for twist due to the material of the contact wire. The material in the contact wire is often hard and resists wear well, commonly causing the contact wire to become brittle. Yet another problem with the solution disclosed in EP1414667 is that in the inactive position the catenary will not carry the contact wire, which causes unnecessary stress to act on the contact wire, which in the long run can cause stress related fractures.

CN 1 994 784 A discloses a suspension arrangement according to the preamble of claim 1.

### SUMMARY

The present invention aims at obviating the aforementioned disadvantages of previously known suspension arrangements for an overhead line and to provide an improved suspension arrangement for an overhead line.

The meaning of vertical is in the present disclosure meant to be interpreted as essentially vertical, thus a turning angle from the vertical line is allowed and the orientation should still be considered to be vertical.

A primary object of the invention is to provide an improved suspension arrangement for an overhead line of the initially defined type that allows vertical loading and access to a train.

Another object of the invention is to provide a moveable suspension arrangement for an overhead line that does not cause unnecessary stress, in either the active or the inactive position or in movement there between, on the overhead line.

According to the invention at least the primary object is attained by means of the initially defined arrangement having the special feature of a link arm arrangement is pivotally connected to an upper attachment means and to a lower attachment means of an attachment arrangement, and that at least one of said upper attachment means and said lower attachment means comprises a lever operable for movement of the support unit with preserved vertical orientation both within and outside the area used for power supply.

By the feature that at least one of said upper attachment means and said lower attachment means comprises a lever operable for movement of the support unit with preserved vertical orientation, both within and outside of the region used for power supply, is the purpose to provide a moveable suspension arrangement for an overhead line attained. The lever allows a linear movement to be translated into a turning movement. Thus, the lever provides a more simple and robust mechanical construction compared to previously known solutions.

By orienting the support unit in the inactive position in such a way that its vertical orientation is preserved will the catenary mounted in the catenary holder carry the contact wire mounted in the contact wire holder even in the inactive position. Further, the contact wire will not be exposed to unnecessary forces and torques, which is of great importance for a normal contact wire due to the hardness thereof.

In a preferred embodiment comprises a link arm arrangement at least one compensation link arranged between an attachment arrangement and the link arm arrangement, wherein the compensation link allows a turning movement of the link arm arrangement in a horizontal direction relative the attachment arrangement. Thereby, another advantage is attained by allowing the suspension arrangement to accommodate changes in length of the contact wire and the catenary carried by the support unit, which changes in length can be caused by changes in temperature of the contact wire and/or the catenary.

According to yet another preferred embodiment comprises said link arm arrangement at least one insulator, wherein said insulator is arranged to electrically isolate said support unit from said attachment arrangement. An electrical insulation of the support unit is desirable in order to prevent the whole suspension arrangement from being alive, with risk for spark-over to nearby devices and living creatures.

According to yet another preferred embodiment comprises said link arm arrangement an upper arm, a lower arm and a brace. The upper arm 15 comprises in a first end a first attachment means and is pivotally connected in a second end with said brace, the upper arm further comprises said first insulator that is arranged between said first end and said second end of said upper arm. The lower arm comprises in a first end a second attachment means and is pivotally connected with said brace in a second end, the lower arm further comprises the second insulator which is arranged between said first end and said second end of said lower arm. The brace pivotally connects said upper arm with said lower arm and carries said support unit. By forming the link arm arrangement in this way the same becomes both simple and cheap due to its parallelogram shape with opposing parallel sides.

According to yet another preferred embodiment is said first attachment means of said upper arm of said link arm arrangement pivotally connected to said upper attachment means of the attachment arrangement, wherein said second attachment means of said lower arm is pivotally connected to said lower attachment means of the attachment arrangement. Through this embodiment can the support unit, which is arranged connected to the link arm arrangement, easily be turned between the active and the inactive position by deforming the parallelogram of the link arm arrangement by pivoting the lower arm and the upper arm.

According to yet another preferred embodiment is the second insulator located at a distance from the first end of the lower arm that is equal to the sum of: the distance between the upper attachment means and the lower attachment means of the attachment arrangement, and the distance between the upper attachment means and the first insulator. In this way the required electrical insulation distance is guaranteed in the active position as well as in the inactive position.

According to yet another preferred embodiment comprises the lever an actuator operable for said movement of the support unit between the active position and the inactive position. In this way is remote maneuvering and remote control of the support unit possible between the active and the inactive position due to the fact that an actuator easily can be adapted for electric control and maneuvering.

According to yet another preferred embodiment comprises the actuator an electric motor and a ball screw. This embodiment of a linear actuator is both cheap and mechanically robust with an effective arresting of the linear position of the actuator.

### SHORT DESCRIPTION OF THE DRAWINGS

A more complete understanding of hereinabove mentioned and other features and advantages of the present invention will be apparent from the following detailed description of preferred embodiments with reference to the accompanying drawings, in which:
Fig. 1 is a side view of a suspension arrangement for an overhead line in an active position arranged on a pole beside a railway,
Fig. 2 is a side view of a suspension arrangement for an overhead line in an inactive position arranged on a pole beside a railway
Fig. 3 is a side view of a suspension arrangement for an overhead line,
Fig. 4 is a side view of a support unit connected to a brace of the link arm arrangement,
Fig. 5 is a side view of a suspension arrangement for an overhead line,
Fig. 6 is a side view of a suspension arrangement for an overhead line,

### DETAILED DESCRIPTION

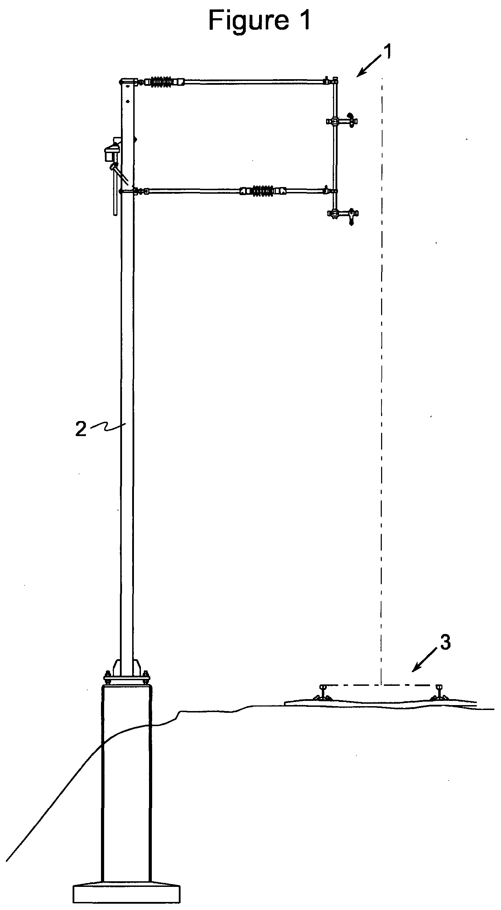

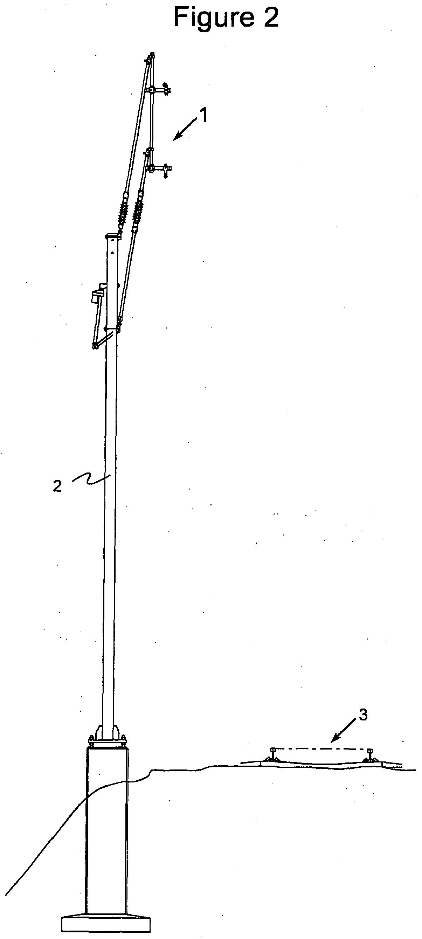

Initially, reference is made to figure 1 and 2, which discloses a suspension arrangement according to the invention, generally designated 1, for an overhead line, which suspension arrangement 1 is arranged on a supporting structure such as a pole 2, located beside a railway 3.

A conventional overhead line comprises a catenary and a contact wire and several catenary hangers. The catenary hangs above the contact wire and carries the contact wire using catenary hangers. This type of overhead line is today the most commonly used type, and is used for most types of rail traffic.

In figure 1 is the suspension arrangement 1 disclosed in an active position, in which the suspension arrangement 1 is operable for power supply of an electric train (not shown) located on the railway.

In figure 2 is the suspension arrangement 1 disclosed in an inactive position, in which the suspension arrangement 1 allows vertical access to said electric train. Vertical access to the train is advantageous for loading of goods, since both overhead travelling cranes and cranes can be used. It is also advantageous with vertical access to the train during loading with a truck since the truck driver is not limited by the limited vertical space, which is especially limiting during loading of bulky goods that either partly or completely obstructs the vision of the space above the train.

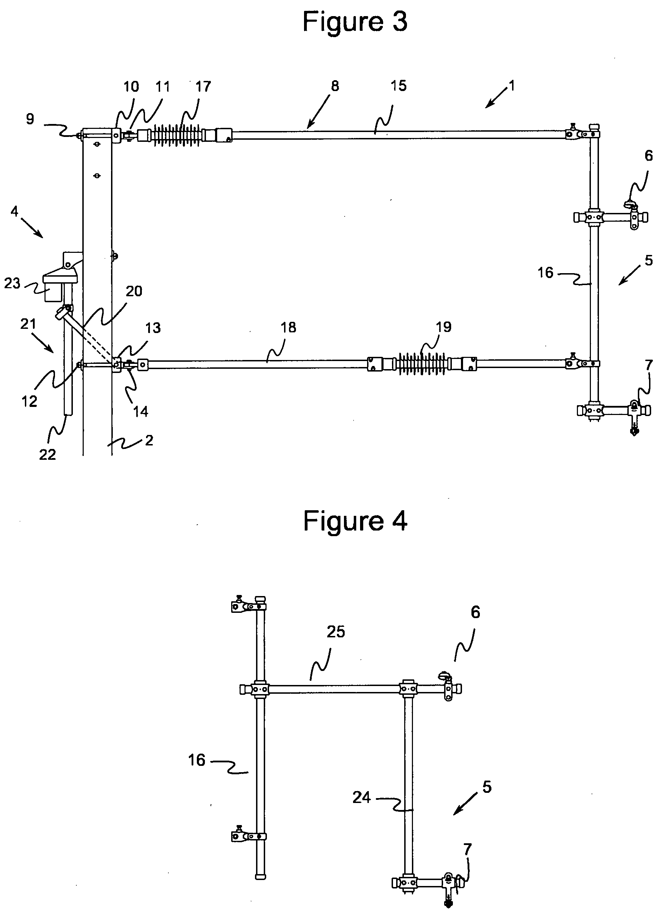

Reference is now made to figure 3 in which a preferred embodiment of the inventive suspension arrangement 1 is disclosed.

The suspension arrangement 1 comprises an attachment arrangement 4, for a fixed or removable connection with a supporting structure, such as a wall, a pole or a truss construction. In the disclosed embodiment is a pole 2 shown.

The suspension arrangement 1 further comprises a support unit 5 which comprises a catenary holder 6 and a contact wire holder 7.
The suspension arrangement 1 further comprises a link arm arrangement 8, which link arm arrangement 8 is located between the attachment arrangement 4 and the support unit 5. The support unit 5 is moveable between an active position and an inactive position, which positions are disclosed in figure 1 and figure 2, respectively. In the active position is the support unit 5 operable for power supply of a train and in the inactive position is vertical access to the train allowed. In both the active and the inactive position of the support unit 5 is the vertical orientation of the support unit 5 preserved. For mounting an overhead line of the hereinabove said type must the support unit 5 comprise both a catenary holder 6 and a contact wire holder 7. The catenary holder 6 and the contact wire holder 7 is arranged to hold the catenary and the contact wire, respectively in the support unit 5.

This results in that an overhead line that is carried by the support unit 5 will not be exposed to unnecessary mechanical strain in either the active or the inactive position or in movement there between, which is of great importance for the lifetime of the overhead line. This is achieved by preserving the vertical orientation of the support unit 5 and thereby the vertical orientation of the overhead line.

According to the invention the attachment arrangement 4 comprises an upper attachment means 9 which is arranged to be attached to a supporting structure, which in the preferred embodiment is a pole 2. The upper attachment means 9 comprises an upper attachment joint 10 that allows movement in a plane parallel with the longitudinal direction of the pole 2. This upper attachment joint 10 allows the movement between the inactive position and the active position of the support unit 5.

The upper attachment joint 10 is arranged to be connected with an upper compensation link 11 which pivotally connects the upper attachment joint 10 with the link arm arrangement 8 for a turning movement about the longitudinal axis of the pole 2. This turning movement is intended to compensate for changes in length of the contact wire and the catenary carried by the support unit 5, wherein the changes in length can be due to changes in temperature of the contact wire and/or the catenary.

In a preferred embodiment of the invention comprises the link arm arrangement 8 at least one insulator 17, 19, which is arranged to electrically insulate said support unit 5 from the attachment arrangement 4.

According to the invention the attachment arrangement 4 comprises also a lower attachment means 12 which is arranged to be attached to a supporting structure, a pole 2 in this embodiment. The lower attachment means 12 comprises a lower attachment joint 13 that allows movement in a plane parallel with the longitudinal direction of the pole 2. This lower attachment joint 13 allows the movement between the inactive position and the active position of the support unit 5.

The lower attachment joint 13 is arranged to be connected to a lower compensation link 14 which pivotally connects the lower attachment joint 13 to the link arm arrangement 8 for a turning movement about the longitudinal axis of the pole 2. This turning movement is intended to compensate for changes in length of the contact wire and the catenary carried by the support unit 5, wherein the changes in length can be due to changes in temperature of the contact wire and/or the catenary.

Said compensation links 11,14 are in a preferred embodiment arranged to allow a turning of maximum 180 degrees.

The link arm arrangement 8 comprises an upper arm 15 that in a first end comprises a first attachment means connected to the upper compensation link 11, and is pivotally connected in a second end to a brace 16. Between the first end and the second end of the upper arm 15 is a first insulator 17 arranged. This first insulator 17 electrically insulates the first end from the second end of the upper arm 15.

The link arm arrangement 8 also comprises a lower arm 18 that in a first end comprises a second attachment means connected to the lower compensation link 14 and is pivotally connected in the second end to the brace 16. Between the first end and the second end of the lower arm 18 is a second insulator 19 arranged. This second insulator 19 electrically insulates the first end from the second end of the lower arm 18.

The support unit 5 is connected to the brace 16. In this embodiment is the catenary holder 6 connected to the brace 16 and is located above the contact wire holder 7 which is also connected to the brace 16.

By isolating the first and the second ends of the arms 15,18 of the link arm arrangement 8 from each other, the support unit 5 will be electrically insulated from the attachment arrangement 4.

The technical effect of arranging the link arm arrangement 8 as described hereinabove is that the parallelogram formed by the upper arm 15, the lower arm 18 and the brace 16 can be deformed by pivoting the lower arm 18 and the upper arm 15. The pivoting results in that the brace 16 will be moved in an arc movement between the active position and the inactive position towards the pole 2. During the complete arc movement will the longitudinal axis of the brace 16 essentially be parallel with the longitudinal axis of the pole 2. Thereby, the support unit 5 will maintain the vertical orientation thereof during the complete movement.

To ensure that the required electrical insulation distance in the active and the inactive position is fulfilled it is preferred that the second insulator 19 is located a distance from the first end of the lower arm 18 that is equal to the sum of the distance between the upper attachment means 9 and the lower attachment means 12 along the pole 2 and the distance between the upper attachment means 9 and the first insulator 17 along the upper arm 15.

The movement between the active position and the inactive position of the support unit 5 is in a preferred embodiment of the invention caused by a lever 20 which is arranged in the lower attachment joint 13 of the lower attachment means 12 of the attachment arrangement 4. The lever point of the lever 20 is arranged in the pivoting center of the lower attachment joint 13, the first end of the lever 20 is connected to the lower compensation link 14. Said lever 20 is thus operable for deformation of the parallelogram by pivoting the lower arm 18. The second end of the lever 20 is arranged to be pivotally connected to an actuator 21. By having an actuator operable for causing the movement, between the active position and the inactive position, using the lever 20 can the movement easily be remote maneuvered. Remote maneuvering is of great interest when a plant comprising several suspension arrangements 1 is to be maneuvered simultaneously allowing vertical access for loading of a train.

In a preferred embodiment the actuator 21 comprises a ball screw 22 and an electric motor 23. The ball screw 22 is pivotally connected with the second end of the lever 20, whereby the ball screw 22 causes a pivot movement of the lever 20 and the lower arm 18 pivots upwards in a plane parallel with the pole 2 in the preferred embodiment. The parallelogram driven by the lever 20 is deformed by the movement of the lever 20. In alternative embodiments can instead the lower arm 18 pivot downwards. In yet another embodiment can the lever 20 be arranged to act on the upper arm 15 for movement of the link arm arrangement 8 between the active position and the inactive position.

Reference is now made to figure 4 in which yet another embodiment of the support unit 5 is disclosed. The support unit 5 comprises a catenary holder 6 and a contact wire holder 7 connected by means of a support unit brace 24. The support unit brace is in turn connected to a support unit arm 25 connected to the brace 16 of the link arm arrangement 8.

In yet another preferred embodiment said compensation links 11,14 may be arranged to allow a pivot of the link arm arrangement 8 about the longitudinal direction of the pole 2 to allow a movement between the active position and the inactive position. This movement means that the link arm arrangement 8 is not deformed but instead is folded away.

In the hereinbelow disclosed embodiments is only the differences between these embodiments and the aforementioned embodiments described.

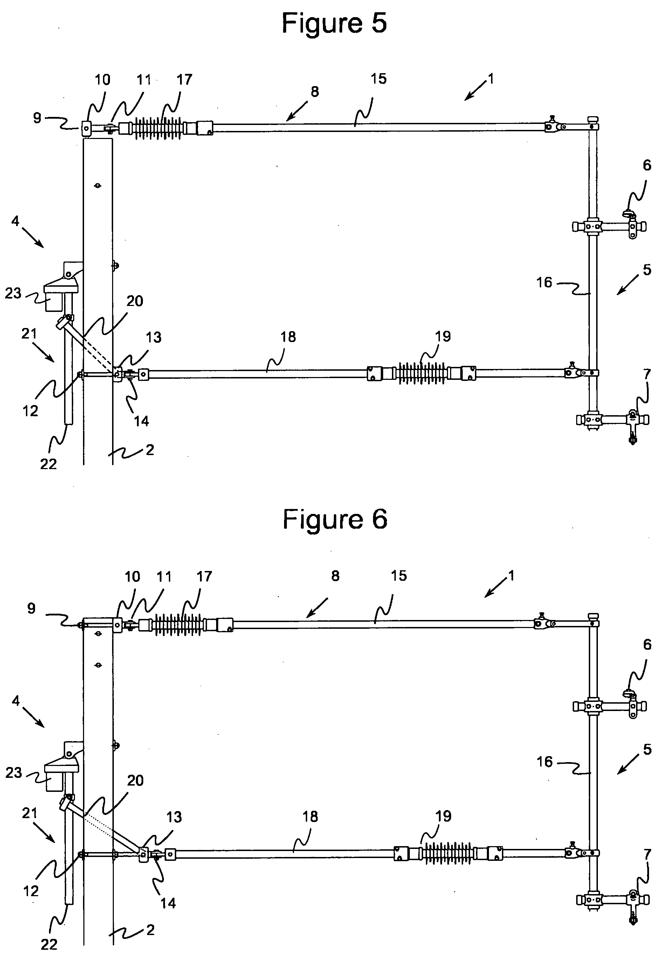

Reference is now made to figure 5 in which a preferred embodiment of the inventive suspension arrangement 1 disclosed. In this embodiment is said upper attachment means 9 arranged on the free end of the pole 2 and said lower attachment means 12 is arranged on the side of the pole 2 at a distance along the pole 2 from the upper attachment means 9. The upper attachment means 9 is arranged in such a way that the upper attachment joint 10 is located at larger distance from the brace 16 of the link arm arrangement 8 than the distance from the lower attachment joint 13 of the lower attachment means 12 to said brace 16. This location of the attachment means 9, 12 causes the pivot center of the upper attachment joint 13 to be displaced a larger horizontal distance from the brace 16 of the link arm arrangement 8 than the pivot center of the lower attachment joint 13.

The pivot connection of the upper arm 15 to the brace 16 of the link arm arrangement 8 is also displaced a horizontal distance in a direction towards the pole 2 relative the lower arms 18 pivot connection to the brace 16 of the link arm arrangement 8.

Such a displacement of the pivot center of the upper attachment joint 10 and the pivot connection between the upper arm 15 and the brace 16 results in that upper arm 15 and the lower arm 18 of the link arm arrangement 8 in the inactive position can be made vertical or close to vertical without being hindered by a collision between the upper arm 15 and the lower arm 18, wherein the accessible space for loading increases, when the suspension arrangement 1 is in the inactive position.

Reference is now made to figure 6 in which a preferred embodiment of the inventive suspension arrangement 1 is disclosed. This disclosed embodiment differs from the embodiment disclosed in figure 5 in that the upper attachment means 9 as well as the upper attachment joint 13 is located on the side of the pole 2. The horizontal displacement is in this preferred embodiment performed by displacing the lower attachment joint 13 of the lower attachment means 12 outwards from the pole 2 in a direction towards the support unit 5. Whereby, the pivot center of the upper attachment joint 13 is displaced a desired horizontal distance.

Thus, the embodiments disclosed in figure 5 and 6 is based on the understanding that a horisontal displacement of at least two pivot centers of the suspension arrangement 1 increases the space available for loading when the suspension arrangement 1 is in the inactive position.

In yet another preferred embodiment is the contact wire holder 7 mounted with a resilient arm to the support unit 5. A resilient hanging of the contact wire holder 7 causes the bouncing between the overhead rail collector and the contact wire to decrease, whereby a higher speed of the train is allowed.

It shall also be pointed out that all information about/concerning terms such as above, under, upper, lower, etc., shall be interpreted/read having the equipment oriented according to the figures, having the drawings oriented such that the references can be properly read. Thus, such terms only indicates mutual relations in the shown embodiments.

## Claims

1. Suspension arrangement (1) for an overhead line, the suspension arrangement (1) comprising:
an attachment arrangement (4) for attachment of the suspension arrangement (1) to a supporting structure (2);
a support unit (5) comprising a contact wire holder (7) and a catenary holder (6); and
a link arm arrangement (8) arranged between said attachment arrangement 4 and said support unit (5), wherein the support unit (5) is moveable between an active position operable for power supply of a train, and an inactive position which allows vertical access to said train, **characterized in, that** the link arm arrangement (8) is pivotally connected to:
i) an upper attachment means (9) of said attachment arrangement (4), which upper attachment means (9) is arranged to be pivotally attached by one end to the supporting structure (2); and
ii) to a lower attachment means (12) of said attachment arrangement (4)), which lower attachment means (12) is arranged to be pivotally attached by one end to the supporting structure (2),
**characterized in that** at least one of said upper attachment means (9) and said lower attachment means (12) comprises a lever (20) with a lever point arranged in the pivoting center of at least one of said upper attachment means (9) and said lower attachment means (12), wherein the lever is operable for movement of the support unit (5) between the active position and the inactive position with maintained vertical orientation.

2. Suspension arrangement (1) for a contact wire according to claim 1, wherein said link arm arrangement (8) comprises at least one compensation link (11, 14), which is arranged between said attachment arrangement (4) and said link arm arrangement (8), wherein said compensation link (11,14) allows turning movement of said link arm arrangement (8) in a horizontal direction relative said attachment arrangement (4).

3. Suspension arrangement (1) for a contact wire according to claim 1 or 2, wherein said link arm arrangement (8) comprises at least one insulator (17, 19), wherein said at least one insulator (17, 19) is arranged to electrically isolate said support unit (5) from said attachment arrangement (4).

4. Suspension arrangement (1) for a contact wire according to claim 3, wherein said link arm arrangement (8) comprises a first insulator (17) and a second insulator (19).

5. Suspension arrangement (1) for a contact wire according to claim 4, wherein said link arm arrangement (8) comprises:
an upper arm (15),
a lower arm (18), and
a brace (16),
wherein
the upper arm (15) in a first end comprises a first attachment means and in a second end is pivotally connected with said brace (16), the upper arm (15) further comprises said first insulator (17) that is arranged between said first end and said second end of said upper arm (15),
the lower arm (18) in a first end comprises a second attachment means and in a second end is pivotally connected with said brace (16), the lower arm (18) further comprises said second insulator (19) that is arranged between said first end and said second end of said lower arm (18),
the brace (16) pivotally connects said upper arm (15) with said lower arm (18) and carries said support unit (5).

6. Suspension arrangement (1) for a contact wire according to claim 5, wherein said first attachment means of said upper arm (15) of said link arm arrangement (8) is pivotally connected to said upper attachment means (9) of the attachment arrangement (4), and wherein said second attachment means of said lower arm (18) is pivotally connected to said lower attachment means (12) of the attachment arrangement (4).

7. Suspension arrangement (1) for a contact wire according to claim 6, wherein said second insulator (19) is located at a distance from the first end of said lower arm (18) that is equal to the sum of:
the distance between said upper attachment means (9) and said lower attachment means (12) of the attachment arrangement (4), and
the distance between said upper attachment means (9) and said first insulator (17).

8. Suspension arrangement (1) for a contact wire according to any preceding claim, wherein said lever (20) comprises an actuator (21) operable for said movement of the support unit (5) between the active position and the inactive position.

9. Suspension arrangement (1) for a contact wire according to claim 8, wherein said actuator (21) comprises an electric motor (23) and a ball screw (22).

## Patentansprüche

1. Aufhängungsanordnung (1) für eine Oberleitung, wobei die Aufhängungsanordnung (1) aufweist:
eine Befestigungsanordnung (4) zur Befestigung der Aufhängungsanordnung (1) an einer Stützstruktur (2);
eine Stützeinheit (5), die einen Fahrdrahthalter (7) und einen Tragseilhalter (8) aufweist; und
eine Gelenkarmanordnung (8), die zwischen der Befestigungsanordnung (4) und der Stützeinheit (5) angeordnet ist, wobei die Stützeinheit (5) zwischen einer aktiven Position, die zur Stromversorgung eines Zugs betriebsfähig ist, und einer inaktiven Position beweglich ist, die senkrechten Zugang zum Zug ermöglicht, **dadurch gekennzeichnet, dass** die Gelenkarmanordnung (8) schwenkbar verbunden ist:
i) mit einer oberen Befestigungseinrichtung (9) der Befestigungsanordnung (4), wobei die obere Befestigungseinrichtung (9) so angeordnet ist, dass sie durch ein Ende an der Stützstruktur (2) schwenkbar befestigt ist; und
ii) mit einer unteren Befestigungseinrichtung (12) der Befestigungsanordnung (4), wobei die untere Befestigungseinrichtung (12) so angeordnet ist, dass sie durch ein Ende an der Stützstruktur (2) schwenkbar befestigt ist,
**dadurch gekennzeichnet, dass** die obere Befestigungseinrichtung (9) und/oder die untere Befestigungseinrichtung (12) einen Hebel (20) mit einem Hebelpunkt aufweist, der in der Schwenkmitte der oberen Befestigungseinrichtung (9) und/oder der unteren Befestigungseinrichtung (12) angeordnet ist, wobei der Hebel zur Bewegung der Stützeinheit (5) zwischen der aktiven Position und der inaktiven Position mit beibehaltener senkrechter Orientierung bedienbar ist.

2. Aufhängungsanordnung (1) für einen Fahrdraht nach Anspruch 1, wobei die Gelenkarmanordnung (8) mindestens ein Ausgleichgelenk (11, 14) aufweist, das zwischen der Befestigungsanordnung (4) und der Gelenkarmanordnung (8) angeordnet ist, wobei das Ausgleichgelenk (11, 14) Drehbewegung der Gelenkarmanordnung (8) in waagerechter Richtung relativ zur Befestigungsanordnung (4) ermöglicht.

3. Aufhängungsanordnung (1) für einen Fahrdraht nach Anspruch 1 oder 2, wobei die Gelenkarmanordnung (8) mindestens einen Isolator (17, 19) aufweist, wobei der mindestens eine Isolator (17, 19) so angeordnet ist, dass er die Stützeinheit (5) von der Befestigungsanordnung (4) elektrisch isoliert.

4. Aufhängungsanordnung (1) für einen Fahrdraht nach Anspruch 3, wobei die Gelenkarmanordnung (8) einen ersten Isolator (17) und einen zweiten Isolator (19) aufweist.

5. Aufhängungsanordnung (1) für einen Fahrdraht nach Anspruch 4, wobei die Gelenkarmanordnung (8) aufweist:
einen oberen Arm (15),
einen unteren Arm (18) und
eine Strebe (16),
wobei
der obere Arm (15) an einem ersten Ende eine erste Befestigungseinrichtung aufweist und an einem zweiten Ende mit der Strebe (16) schwenkbar verbunden ist,
der obere Arm (15) ferner den ersten Isolator (17) aufweist, der zwischen dem ersten Ende und dem zweiten Ende des oberen Arms (15) angeordnet ist,
der untere Arm (18) an einem ersten Ende eine zweite Befestigungseinrichtung aufweist und an einem zweiten Ende mit der Strebe (16) schwenkbar verbunden ist,
der untere Arm (18) ferner den zweiten Isolator (19) aufweist, der zwischen dem ersten Ende und dem zweiten Ende des unteren Arms (18) angeordnet ist,
die Strebe (16) den oberen Arm (15) mit dem unteren Arm (18) schwenkbar verbindet und die Stützeinheit (5) trägt.

6. Aufhängungsanordnung (1) für einen Fahrdraht nach Anspruch 5, wobei die erste Befestigungseinrichtung des oberen Arms (15) der Gelenkarmanordnung (8) mit der oberen Befestigungseinrichtung (9) der Befestigungsanordnung (4) schwenkbar verbunden ist und wobei die zweite Befestigungseinrichtung des unteren Arms (18) mit der unteren Befestigungseinrichtung (12) der Befestigungsanordnung (4) schwenkbar verbunden ist.

7. Aufhängungsanordnung (1) für einen Fahrdraht nach Anspruch 6, wobei der zweite Isolator (19) in einem Abstand vom ersten Ende des unteren Arms (18) liegt, der gleich der Summe
des Abstands zwischen der oberen Befestigungseinrichtung (9) und der unteren Befestigungseinrichtung (12) der Befestigungsanordnung (4) und
des Abstands zwischen der oberen Befestigungseinrichtung (9) und dem ersten Isolator (17) ist.

8. Aufhängungsanordnung (1) für einen Fahrdraht nach einem der vorstehenden Ansprüche, wobei der Hebel (20) ein Stellglied (21) aufweist, das zur Bewegung der Stützeinheit (5) zwischen der aktiven Position und der inaktiven Position bedienbar ist.

9. Aufhängungsanordnung (1) für einen Fahrdraht nach Anspruch 8, wobei das Stellglied (21) einen Elektromotor (23) und eine Kugelspindel (22) aufweist.

## Revendications

1. Système de suspension (1) pour une ligne aérienne, le système de suspension (1) comprenant :
- un système de fixation (4) pour fixer le système de suspension (1) à une structure porteuse (2) ;
- une unité de support (5) comprenant un support de fil de contact (7) et un support de caténaire (6) ; et
- un système de bras de raccordement (8) agencé entre ledit système de fixation (4) et ladite unité de support (5), dans lequel l'unité de support (5) peut être déplacée entre une position active opérationnelle pour l'alimentation électrique d'un train, et une position inactive qui permet un accès vertical audit train, **caractérisé en ce que** le système de bras de raccordement (8) est raccordé de façon pivotante à :
i) un moyen de fixation supérieur (9) dudit système de fixation (4), lequel moyen de fixation supérieur (9) est agencé pour être raccordé de façon pivotante par une extrémité à la structure porteuse (2) ; et
ii) à un moyen de fixation inférieur (12) dudit système de fixation (4), lequel moyen de fixation inférieur (12) est agencé pour être raccordé de façon pivotante par une extrémité à la structure porteuse (2) ;
**caractérisé en ce que** au moins un desdits moyens de fixation supérieur (9) et inférieur (12) comprend un levier (20) avec un point de levier disposé dans le centre de pivotement d'au moins un desdits moyens de fixation supérieur (9) et inférieur (12), le levier étant opérationnel pour déplacer l'unité de support (5) entre la position active et la position inactive en conservant l'orientation verticale.

2. Système de suspension (1) pour un fil de contact selon la revendication 1, dans lequel ledit système de bras de raccordement (8) comprend au moins un lien de compensation (11, 14) qui est disposé entre ledit système de fixation (4) et ledit bras de raccordement (8), dans lequel ledit lien de compensation (11, 14) permet de tourner le mouvement dudit système de bras de raccordement (8) dans une direction horizontale par rapport audit système de fixation (4).

3. Système de suspension (1) pour un fil de contact selon la revendication 1 ou 2, dans lequel ledit système de bras de raccordement (8) comprend au moins un isolateur (17, 19), ledit au moins un isolateur (17, 19) étant agencé pour isoler électriquement ladite unité de support (5) dudit système de fixation (4).

4. Système de suspension (1) pour un fil de contact selon la revendication 3, dans lequel ledit système de bras de raccordement (8) comprend un premier isolateur (17) et un deuxième isolateur (19).

5. Système de suspension (1) pour un fil de contact selon la revendication 4, dans lequel ledit système de bras de raccordement (8) comprend :
- un bras supérieur (15),
- un bras inférieur (18), et
- une traverse de renfort (16),
dans lequel le bras supérieur (15), à une première extrémité, comprend un premier moyen de fixation et, à une deuxième extrémité, est raccordé de façon pivotante à ladite traverse de renfort (16), le bras supérieur (15) comprenant en outre ledit premier isolateur (17) qui est agencé entre ladite première extrémité et ladite deuxième extrémité dudit bras supérieur (15),
le bras inférieur (18), à une première extrémité, comprend un deuxième moyen de fixation et à une deuxième extrémité est raccordé de façon pivotante à ladite traverse de renfort (16), le bras inférieur (18) comprenant en outre ledit deuxième isolateur (19) qui est agencé entre ladite première extrémité et ladite deuxième extrémité dudit bras inférieur (18),
- la traverse de renfort (16) raccorde de façon pivotante ledit bras supérieur (15) avec ledit bras inférieur (18) et porte ladite unité de support (5).

6. Système de suspension (1) pour un fil de contact selon la revendication 5, dans lequel ledit premier moyen de fixation dudit bras supérieur (15) dudit système de bras de raccordement (8) est raccordé de façon pivotante audit moyen de fixation supérieur (9) du système de fixation (4), et dans lequel ledit deuxième moyen de fixation dudit bras inférieur (18) est raccordé de façon pivotante audit moyen de fixation inférieur (12) du système de fixation (4).

7. Système de suspension (1) pour un fil de contact selon la revendication 6, dans lequel ledit deuxième isolateur (19) est situé à une distance de la première extrémité dudit bras inférieur (18) égale à la somme de :
la distance entre ledit moyen de fixation supérieur (9) et ledit moyen de fixation inférieur (12) du système de fixation (4), et
la distance entre ledit moyen de fixation supérieur (9) et ledit premier isolateur (17).

8. Système de suspension (1) pour un fil de contact selon l'une des revendications précédentes, dans lequel ledit levier (20) comprend un actionneur (21) opérationnel pour déplacer l'unité de support (5) entre la position active et la position inactive.

9. Système de suspension (1) pour un fil de contact selon la revendication 8, dans lequel ledit actionneur (21) comprend un moteur électrique (23) et une vis à bille (22).
